# EUROPÄISCHE PATENTSCHRIFT

(11) **EP 2 992 033 B1**
(45) Veröffentlichungstag und Bekanntmachung des Hinweises auf die Patenterteilung: **08.03.2017**
(21) Anmeldenummer: 14724351.3
(22) Anmeldetag: 30.04.2014
(51) Int. Cl.: C08G 65/00, C08G 75/20, C08G 65/26, C08K 3/26, C08G 65/334, C08G 65/337

(54) **POLYARYLETHERSULFONCOPOLYMERE**
POLYARYL ETHER SULFONE COPOLYMERS
COPOLYMÈRES DE POLYARYLÉTHERSULFONE

(30) Priorität: 02.05.2013 EP 13166190
(43) Veröffentlichungstag der Anmeldung: 09.03.2016
(73) Patentinhaber: BASF SE, 67056 Ludwigshafen am Rhein (DE)
(72) Erfinder: WEBER, Martin, 67487 Maikammer (DE); MALETZKO, Christian, 67122 Altrip (DE); WEIß, Thomas, 68549 Ilvesheim (DE); ERBES, Jörg, 76137 Karlsruhe (DE); STAAL, Bastiaan Bram Pieter, 67117 Limburgerhof (DE)
(74) Vertreter: Schultz, Hanna G. A.
(86) Internationale Anmeldenummer: PCT/EP2014/058887
(87) Internationale Veröffentlichungsnummer: WO 2014/177643

(56) Entgegenhaltungen:
- EP-A1- 2 554 564
- EP-A2- 0 739 925
- US-A- 5 700 902

## Beschreibung

Die vorliegende Erfindung betrifft ein Verfahren zur Herstellung von Polyarylethersulfon-Polyalkylenoxid-Blockcopolymeren und die Polyarylethersulfon-Polyalkylenoxid-Blockcopolymere selbst.

Polyarylethersulfon-Polymere gehören zur Gruppe der Hochleistungsthermoplasten und zeichnen sich durch hohe Wärmeformbeständigkeit, gute mechanische Eigenschaften und eine inhärente Flammwidrigkeit aus.

Die Herstellung von Polyarylethersulfonen kann entweder über die sogenannte Hydroxid-Methode oder über die sogenannte Carbonat-Methode erfolgen. Bei der Herstellung von Polyarylethersulfon-Polymeren nach der Hydroxid-Methode wird in einem ersten Schritt aus der aromatischen Dihydroxyverbindung das entsprechende Diphenolatdianion hergestellt. Hierzu wird die aromatische Dihydroxyverbindung durch eine starke Base, wie beispielsweise Natriumhydroxid deprotoniert. Die Deprotonierung wird dabei in einem aprotischen polaren Lösungsmittel, wie beispielsweise Dimethylsulfoxid (DMSO) durchgeführt. Bei der Deprotonierung der aromatischen Dihydroxyverbindung wird Wasser freigesetzt. Bei der Hydroxid-Methode ist es notwendig, das gebildete Wasser möglichst vollständig von dem Diphenolatdianion zu entfernen. Das gebildete wasserfreie Diphenolatdianion wird nachfolgend in einem zweiten Schritt mit der aromatischen Dihalogenverbindung zur Reaktion gebracht. Im zweiten Schritt wird das Polyarylethersulfon-Polymer gebildet. Bei der Herstellung von Polyarylethersulfon-Polymeren nach der Hydroxid-Methode müssen im ersten Schritt bei der Deprotonierung der aromatischen Dihydroxyverbindung die stöchiometrischen Verhältnisse zwischen der aromatischen Dihydroxyverbindung und dem zur Deprotonierung eingesetzten Natriumhydroxid möglichst exakt eingehalten werden. Bereits geringfügige Abweichungen in der Stöchiometrie können zu einer drastischen Abnahme der Molekulargewichte der bei der Reaktion gebildeten Polymere führen.

Die bei der Hydroxid-Methode eingesetzten starken Basen können zudem, die bei der Polykondensation gebildeten Etherverknüpfungen wieder spalten, was zu einer weiteren Abnahme des Molekulargewichts der bei der Reaktion gebildeten Polymere führt. Die Herstellung von Polyarylethersulfon-Polymeren nach der Hydroxid-Methode ist somit fehleranfällig und durch Messaufwand zur exakten Einhaltung der Stöchiometrie und die zweistufige Synthese sehr aufwändig und kostenintensiv.

Bei der Carbonat-Methode werden die aromatische Dihydroxyverbindung und die aromatische Dihalogenverbindung zusammen in Gegenwart von Carbonaten, vorzugsweise Kaliumcarbonat, umgesetzt. Hierbei wird als Lösungsmittel in der Regel N,N-Dimethylacetamid oder NMP eingesetzt, dem Toluol als Schleppmittel zur Entfernung von Wasser zugesetzt wird.

Bei der Carbonat-Methode wird vor der eigentlichen Polykondensationsreaktion aus dem Reaktionsgemisch ein Azeotrop aus Toluol und Wasser abdestilliert, um im Reaktionsgemisch aus der aromatischen Dihydroxyverbindung das Diphenolatdianion zu bilden. Die Carbonat-Methode hat gegenüber der Hydroxid-Methode den Vorteil, dass das als Base eingesetzte Kaliumcarbonat im Überschuss verwendet werden kann, ohne dass es zur Verringerung der Molekulargewichte der gebildeten Polymere kommt. Hierdurch wird die Reaktionsführung im Vergleich zur Hydroxid-Methode vereinfacht. Bei den im Stand der Technik beschriebenen Verfahren zur Herstellung von Polyarylethersulfon-Polymeren nach der Carbonat-Methode ist der Einsatz eines Schleppmittels, wie beispielsweise Toluol, zur Entfernung des Wassers zwingend erforderlich.

Eine Übersicht zur Herstellung von Polyarylethersulfon-Polymeren nach der Hydroxid- bzw. nach der Carbonat-Methode gibt beispielsweise J. E. McGrath et. al, POLYMER 25, 1984, Seiten 1827 bis 1836.

Aufgrund der guten Bioverträglichkeit von Polyarylethersulfon-Polymeren werden diese Polymere auch als Materialien zur Herstellung von Dialyse- und Filtersystemen verwendet. Für viele Anwendungen ist die geringe Hydrophilie der Polyarylethersulfon-Polymere jedoch von Nachteil.

Um die Hydrophilie von Polyarylethersulfon-Polymeren zu erhöhen, sind in der Literatur Verfahren beschrieben, bei denen hydrophile Einheiten wie Polyalkylenoxide in Polyarylethersulfon-Polymere eingebaut werden.

So beschreibt F. Hancock, Macromolecules 1996, 29, Seiten 7619 bis 7621 ein Verfahren zur Herstellung von Polyarylethersulfon-Polyethylenoxid-Blockcopolymeren. Die Herstellung erfolgt dabei nach der Carbonat-Methode. Hierzu werden Monomethylpolyethylenglycol (Me-PEG), Bisphenol A und 4,4'-Dichlordiphenylsulfon in Gegenwart von Kaliumcarbonat und einem Lösungsmittelgemisch aus N-Methylpyrrolidon und Toluol zur Reaktion gebracht. Für die Umsetzung wesentlich ist, dass das entstehende Reaktionswasser abgetrennt wird. Hierzu wird das Reaktionswasser als Azeotrop aus Wasser und Toluol bei Temperaturen im Bereich von 150 bis 160 °C abgetrennt, bevor bei Temperaturen zwischen 180 und 190 °C die eigentliche Polykondensationsreaktion einsetzt. Es wird dabei ein Polyarylethersulfon-Polyethylenoxid-Blockcopolymer erhalten, das Me-PEG-Einheiten als Endgruppen eines Polyarylethersulfonblocks enthält.

EP 0 739 925 beschreibt ebenfalls die Herstellung von Polyarylethersulfon-Polyalkylenoxid-Blockcopolymeren. Die Herstellung erfolgt dabei nach der Hydroxid-Methode. Hierzu wird zunächst Bisphenol A in Gegenwart von Natriumhydroxid deprotoniert, um das entsprechende Diphenolatdianion herzustellen. Die Deprotonierung erfolgt dabei in Dimethylsulfoxid in Gegenwart von Chlorbenzol als Schleppmittel. Um das Diphenolatdianion in wasserfreier Form zu erhalten, wird Wasser als Azeotrop mit Chlorbenzol abdestilliert. Nachfolgend wird das wasserfreie Diphenolatanion des Bisphenols A mit Dichlordiphenylsulfon zur Reaktion gebracht.

Die US 5,700,902 beschreibt ein Verfahren zur Herstellung von Polyarylethersulfon-Polyethylenoxid-Blockcopolymeren nach der Carbonat-Methode. Hierzu wird Monomethylpolyethylenglycol (Me-PEG) zusammen mit Bisphenol A und Dichlordiphenylsulfon in Gegenwart von Kaliumcarbonat umgesetzt. Als Lösungsmittel wird ein Gemisch aus N-Methylpyrrolidon und Toluol als Schleppmittel eingesetzt. Das entstehende Reaktionswasser wird als Azeotrop aus Toluol und Wasser entfernt.

Die WO 97/22406 beschreibt ein Verfahren zur Herstellung von Polyarylethersulfon-Polyethylenoxid-Blockcopolymeren. Bei diesem Verfahren wird das zur Steigerung der Hydrophilie eingesetzte Polyethylenglycol in einem ersten Schritt aktiviert. Zur Aktivierung des Polyethylenglycols wird dieses mesyliert. Hierzu wird das Polyethylenglycol bei tiefen Temperaturen in Dichlormethan durch Triethylamin deprotoniert und anschließend mit Methansufonylchlorid umgesetzt. In einem zweiten Schritt wird ein Polyarylethersulfon-Polymer durch Kondensation von Bisphenol A und Dichlordiphenylsulfon hergestellt. In einem dritten Schritt wird das im zweiten Schritt hergestellte Polyarylethersulfon-Polymer mit dem aktivierten (mesylierten) Polyethylenglycol zur Reaktion gebracht, wobei das Reaktionswasser ebenfalls als Azeotrop aus Toluol und Wasser entfernt wird. Diese Polykondensation wird dabei in Gegenwart von Kaliumcarbonat als Base und in N-Methylpyrrolidon und Toluol als Lösungsmittel durchgeführt. Die im ersten Schritt durchgeführte Aktivierung des Polyethylenglycols ist äußerst kostenintensiv und aufwändig und somit für die großindustrielle Synthese ungeeignet.

Die im Stand der Technik beschriebenen Verfahren zur Herstellung von Polyarylethersulfon-Polyalkylenoxid-Blockpolymeren sind aufwändig und kostenintensiv. Bei den bekannten Verfahren, die nach der Carbonat-Methode durchgeführt werden ist zwingend der Einsatz eines Schleppmittels wie Toluol oder Chlorbenzol notwendig, um das gebildete Reaktionswasser zu entfernen. Der Einsatz dieser Schleppmittel führt in den nachgelagerten Aufarbeitungsschritten zu Trennproblemen des eingesetzten Lösungsmittelgemischs, zu größeren Rückführungsströmen und somit zu einer Erhöhung der Prozesskosten. Die im Stand der Technik beschriebenen Verfahren, die der Hydroxid-Methode folgen, sind wie vorstehend beschreiben, ebenfalls aufwändig und kostenintensiv, da die Synthese zweistufig durchgeführt werden muss. Zudem muss die Stöchiometrie zwischen aromatischer Dihydroxyverbindung und eingesetzter Base exakt eingehalten werden. Dadurch werden diese Verfahren fehleranfällig und sind mit einem erhöhten Messaufwand verbunden.

Auch die Verfahren, bei denen aktivierte Polyethylenglycole eingesetzt werden, sind nachteilig. Dies liegt insbesondere darin begründet, dass der vorgelagerte Schritt der Aktivierung des eingesetzten Polyethylenglycols aufwändig und kostenintensiv ist, so dass diese Verfahren großtechnisch nicht wirtschaftlich durchgeführt werden können.

Bei den im Stand der Technik beschriebenen Verfahren zur Herstellung von Polyarylethersulfon-Polylkylenoxid-Blockcopolyeren werden zudem meist unzufrieden stellende Einbauraten des zur Steigerung der Hydrophilie eingesetzten Polyalkylenoxids erreicht. Unter Einbaurate wird hierbei die Menge des in das erhaltene Polyarylethersulfon-Polyalkylenoxid-Blockcopolymer eingebaute Polyalkylenoxids verstanden, bezogen auf die ursprünglich in die Polykondensationsreaktion eingesetzte Menge an Polyalkylenoxid. Darüber hinaus werden bei den im Stand der Technik beschriebenen Verfahren zur Herstellung von Polyarylethersulfon-Polyalkylenoxid-Blockcopolymeren meist sehr breite Molekulargewichtsverteilungen erhalten. Ein Maß für die Molekulargewichtsverteilung ist die Polydisperisität (Q). Die Polydispersität (Q) ist definiert als Quotient aus dem gewichtsmittleren Molekulargewicht (M_{w}) und dem zahlenmittleren Molekulargewicht (Mₙ). Bei den im Stand der Technik beschriebenen Verfahren werden meist Polydispersitäten (Q) deutlich größer als 4 erhalten, beispielsweise Polydispersitäten (Q) im Bereich von 4,1 bis 6,3.

Der vorliegenden Erfindung liegt somit die Aufgabe zugrunde, ein Verfahren zur Herstellung von Polyarylethersulfon-Polyalkylenoxid-Blockcopolymeren (PPC) bereitzustellen, das die Nachteile der im Stand der Technik beschriebenen Verfahren nicht oder nur in vermindertem Maße aufweist. Das erfindungsgemäße Verfahren soll dabei einfach, möglichst fehlerunanfällig und kostengünstig durchführbar sein. Mit dem erfindungsgemäßen Verfahren sollen gute Einbauraten in Bezug auf das eingesetzte Polyalkylenoxid erreicht werden. Darüber hinaus sollen mit dem erfindungsgemäßen Verfahren Polyarylethersulfon-Polyalkylenoxid-Blockcopolymere (PPC) zugänglich gemacht werden, die eine enge Molekulargewichtsverteilung und somit eine niedrige Polydispersität (Q) aufweisen. Die Polyarylethersulfon-Polyalkylenoxid-Blockcopolymere (PPC) sollen darüber hinaus eine hohe Glastemperatur sowie einen niedrigen Anteil an Fremdstoffen, wie z. B. Schleppmittel, aufweisen.

Diese Aufgabe wird erfindungsgemäß gelöst durch ein Verfahren zur Herstellung von Polyarylethersulfon-Polyalkylenoxid-Blockcopolymeren (PPC) umfassend die Polykondensation eines Reaktionsgemischs (R_{G}) enthaltend die Komponenten:
(A1) mindestens eine aromatische Dihalogenverbindung,
(B1) mindestens eine aromatische Dihydroxyverbindung,
(B2) mindestens ein Polyalkylenoxid, das mindestens zwei Hydroxygruppen aufweist,
(C) mindestens ein aprotisches polares Lösungsmittel und
(D) mindestens ein Metallcarbonat,
wobei das Reaktionsgemisch (R_{G}) keine Substanz enthält, die mit Wasser ein Azeotrop bildet.

### Reaktionsgemisch (R_{G})

Zur Herstellung des erfindungsgemäßen Polyarylethersulfon-Polyalkylenoxid-Blockcopolymers (PPC) wird ein Reaktionsgemisch (R_{G}) umgesetzt, welches die vorstehend beschriebenen Komponenten (A1), (B1), (B2), (C) und (D) enthält. Die Komponenten (A1), (B1) und (B2) gehen dabei eine Polykondensationsreaktion ein.

Die Komponente (C) dient als Lösungsmittel. Die Komponente (D) dient als Base, um die Komponenten (B1) und (B2) während der Kondensationsreaktion zu deprotonieren.

Unter Reaktionsgemisch (R_{G}) wird dabei das Gemisch verstanden, das im erfindungsgemäßen Verfahren zur Herstellung der Polyarylethersulfon-Polyalkylenoxid-Blockcopolymere (PPC) eingesetzt wird. Vorliegend beziehen sich alle Angaben in Bezug auf das Reaktionsgemisch (R_{G}) somit auf das Gemisch, das vor der Polykondensation vorliegt. Während des erfindungsgemäßen Verfahrens findet die Polykondensation statt, wobei sich das Reaktionsgemisch (R_{G}) durch Polykondensation der Komponenten (A1), (B1) und (B2) zum Zielprodukt, dem Polyarylethersulfon-Polyalkylenoxid-Blockcopolymer (PPC) umsetzt. Das nach der Polykondensation erhaltene Gemisch, welches das Zielprodukt, das Polyarylethersulfon-Polylakylenoxid-Blockcopolymer (PPC) enthält, wird auch als Produktgemisch (P_{G}) bezeichnet.

In der Regel werden die Komponenten des Reaktionsgemischs (R_{G}) gemeinsam zur Reaktion gebracht. Die einzelnen Komponenten können dabei in einem vorgelagerten Schritt gemischt und anschließend zur Reaktion gebracht werden. Es ist auch möglich, die Einzelkomponenten einem Reaktor zuzuführen, in dem diese gemischt werden und nachfolgend zur Reaktion gebracht werden.

Bei dem erfindungsgemäßen Verfahren werden die einzelnen Komponenten des Reaktionsgemischs (R_{G}) im Allgemeinen gemeinsam umgesetzt. Die Umsetzung erfolgt dabei bevorzugt einstufig. Das heißt, die Deprotonierung der Komponenten (B1) und (B2) sowie die Kondensationsreaktion zwischen den Komponenten (A1) und (B1) sowie (B2) erfolgt in einer einzigen Reaktionsstufe, ohne dass Zwischenprodukte, wie beispielsweise die deprotonierten Spezies der Komponenten (B1) beziehungsweise (B2), isoliert werden.

Das erfindungsgemäße Verfahren erfolgt nach der sogenannten Carbonat-Methode. Das erfindungsgemäße Verfahren erfolgt nicht nach der sogenannten Hydroxid-Methode. Das heißt, das erfindungsgemäße Verfahren wird nicht zweistufig unter Isolierung von Phenolatanionen durchgeführt. In einer bevorzugten Ausführungsform ist das Reaktionsgemisch (R_{G}) im Wesentlichen frei von Alkali- und Erdalkalihydroxiden. Unter "im Wesentlichen frei" wird vorliegend verstanden, dass das Reaktionsgemisch (R_{G}) weniger als 100 ppm, bevorzugt weniger als 50 ppm Alkali- und Erdalkalihydoxide enthält, bezogen auf das Gesamtgewicht des Reaktionsgemisches (R_{G}). Bevorzugt ist das Reaktionsgemisch (R_{G}) im Wesentlichen frei von Natriumhydroxid und Kaliumhydroxid.

### Komponente (A1)

Als Komponente (A1) enthält das Reaktionsgemisch (R_{G}) mindestens eine aromatische Dihalogenverbindung. Unter "mindestens eine aromatische Dihalogenverbindung" werden vorliegend genau eine aromatische Dihalogenverbindung sowie Gemische aus zwei oder mehreren aromatischen Dihalogenverbindungen verstanden. Bevorzugt enthält das Reaktionsgemisch (R_{G}) als Komponente (A1) mindestens eine aromatische Dihalogensulfonverbindung. Besonders bevorzugt als aromatische Dihalogenverbindungen (Komponente (A1)) sind Dihalogendiphenylsulfone.

Gegenstand der vorliegenden Erfindung ist somit auch ein Verfahren in dem das Reaktionsgemisch (R_{G}) als Komponente (A1) mindestens ein Dihalogendiphenylsulfon enthält.

Die Komponente (A1) wird bevorzugt als Monomer eingesetzt. Das heißt, das Reaktionsgemisch (R_{G}) enthält Komponente (A1) als Monomer und nicht als Präpolymer.

Das Reaktionsgemisch (R_{G}) enthält als Komponente (A1) bevorzugt mindestens 50 Gew.-% einer aromatischen Dihalogensulfonverbindung, bevorzugt einer Dihalogendiphenylsulfonverbindung, bezogen auf das Gesamtgewicht der Komponente (A1) im Reaktionsgemisch (R_{G}).

Unter den Dihalogendiphenylsulfonen sind die 4,4'-Dihalogendiphenylsulfone bevorzugt. Besonders bevorzugt als Komponente (A1) sind 4,4'-Dichlordiphenylsulfon, 4,4'-Difluordiphenylsulfon und 4,4'-Dibromdiphenylsulfon. Insbesondere bevorzugt sind 4,4'-Dichlordiphenylsulfon und 4,4'-Difluordiphenylsulfon, wobei 4,4'-Dichlordiphenylsulfon am Meisten bevorzugt ist.

Gegenstand der vorliegenden Erfindung ist somit auch ein Verfahren, das dadurch gekennzeichnet ist, dass Komponente (A1) mindestens 50 Gew.-% mindestens einer aromatischen Dihalogensulfon-Verbindung ausgewählt aus der Gruppe bestehend aus 4,4'-Dichlordiphenylsulfon und 4,4'-Difluordiphenylsulfon enthält, bezogen auf das Gesamtgewicht der Komponente (A1) im Reaktionsgemisch (R_{G}).

In einer besonders bevorzugten Ausführungsform enthält die Komponente (A1) mindestens 80 Gew.-%, bevorzugt mindestens 90 Gew.-%, mehr bevorzugt mindestens 98 Gew.-% einer aromatischen Dihalogensulfonverbindung ausgewählt aus der Gruppe bestehend aus 4,4'-Dichlordiphenylsulfon und 4,4'-Difluordiphenylsulfon, bezogen auf das Gesamtgewicht der Komponente (A1) im Reaktionsgemisch (R_{G}).

In einer weiteren besonders bevorzugten Ausführungsform besteht die Komponente (A1) im Wesentlichen aus mindestens einer aromatischen Dihalogensulfonverbindung ausgewählt aus der Gruppe bestehend aus 4,4'-Dichlordiphenylsulfon und 4,4'-Difluordiphenylsulfon. Unter "bestehend im Wesentlichen aus" wird vorliegend verstanden, dass die Komponente (A1) mehr als 99 Gew.-%, bevorzugt mehr 99,5 Gew.-%, insbesondere bevorzugt mehr als 99,9 Gew.-% mindestens einer aromatischen Dihalogensulfonverbindung ausgewählt aus der Gruppe bestehend aus 4,4'-Dichlordiphenylsulfon und 4,4'-Difluordiphenylsulfon enthält, jeweils bezogen auf das Gesamtgewicht der Komponente (A1) im Reaktionsgemisch (R_{G}). Bei diesen Ausführungen ist 4,4'-Dichlordiphenylsulfon als Komponente (A1) besonders bevorzugt.

In einer weiteren besonders bevorzugten Ausführungsform besteht Komponente (A1) aus 4,4'-Dichlordiphenylsulfon.

### Komponente (B1)

Das Reaktionsgemisch (R_{G}) enthält als Komponente (B1) mindestens eine aromatische Dihydroxyverbindung. Unter "mindestens eine aromatische Dihydroxyverbindung" werden vorliegend genau eine aromatische Dihydroxyverbindung sowie Gemische aus zwei oder mehreren aromatischen Dihydroxyverbindungen verstanden. Als aromatische Dihydroxyverbindung werden üblicherweise Verbindungen eingesetzt, die zwei phenolische Hydroxygruppen aufweisen. Da das Reaktionsgemisch (R_{G}) ein Metallcarbonat enthält, können die Hydroxygruppen der Komponente (B1) im Reaktionsgemisch teilweise in deprotonierter Form vorliegen. Gleiches gilt für die Komponente (B2).

Die Komponente (B1) wird bevorzugt als Monomer eingesetzt. Das heißt, das Reaktionsgemisch (R_{G}) enthält Komponente (B1) als Monomer und nicht als Präpolymer.

Geeignete aromatische Dihydroxyverbindungen (Komponente (B1)) sind beispielsweise ausgewählt aus der Gruppe bestehend aus 4,4'-Dihydroxybiphenyl und 4,4'-Dihydroxydiphenylsulfon.

Prinzipiell können auch andere aromatische Dihydroxyverbindungen wie beispielsweise Bisphenol A (IUPAC-Bezeichnung: 4,4'-(Propane-2,2-diyl)diphenol)) eingesetzt werden. Die erfindungsgemäß vorteilhaften Effekte, d.h. die niedrige Polydispersität (Q) und die hohen Einbauraten an Poylalkylenoxid, sind beim Einsatz von Dihydroxyverbindungen (Komponente (B1)) ausgewählt aus der Gruppe bestehend aus 4,4'-Dihydroxybiphenyl und 4,4'-Dihydroxydiphenylsulfon jedoch besonders ausgeprägt.

Bei den im Stand der Technik beschriebenen Verfahren werden ausschließlich Polyarylethersulfon-Polyalkylenoxid-Blockcopolymere (PPC) hergestellt, die als aromatische Dihydroxyverbindung Bisphenol A und als aromatische Dihalogenverbindung ein Dihalogendiphenylsulfon enthalten. Die im Stand der Technik hergestellten Polyarylethersulfon-Polyalkylenoxid-Blockcopolymere (PPC), die Bisphenol A als aromatische Dihydroxyverbindung enthalten, werden auch als Polysulfon-Polyalkylenoxid-Blockcopolymere bezeichnet.

In einer Ausführungsform der vorliegenden Erfindung enthält das Reaktionsgemisch (R_{G}) kein Bisphenol A.

Im Allgemeinen enthält die Komponente (B1) mindestens 50 Gew.-%, bevorzugt mindestens 80 Gew.-%, besonders bevorzugt mindestens 90 Gew.-% und insbesondere mindestens 98 Gew.-% einer aromatischen Dihydroxyverbindung ausgewählt aus der Gruppe bestehend aus 4,4'-Dihydroxybiphenyl und 4,4'-Dihydroxydiphenylsulfon, bezogen auf das Gesamtgewicht der Komponente (B1) im Reaktionsgemisch (R_{G}). Als aromatische Dihydroxyverbindung besonders bevorzugt ist 4,4'-Dihydroxydiphenylsulfon.

Gegenstand der vorliegenden Erfindung ist somit auch ein Verfahren, in dem Komponente (B1) mindestens 50 Gew.-% einer aromatischen Dihydroxyverbindung ausgewählt aus der Gruppe bestehend aus 4,4'-Dihydroxybiphenyl und 4,4'-Dihydroxydiphenylsulfon enthält, bezogen auf das Gesamtgewicht der Komponente (B1) im Reaktionsgemisch (R_{G}).

In einer besonders bevorzugten Ausführungsform besteht die Komponente (B1) im Wesentlichen aus mindestens einer aromatischen Dihoydroxyverbindung ausgewählt aus der Gruppe bestehend aus 4,4'-Dihydroxybiphenyl und 4,4'-Dihydroxydiphenylsulfon. Unter "bestehend im Wesentlichen aus" wird vorliegend verstanden, dass die Komponente (B1) mehr als 99 Gew.-%, bevorzugt mehr 99,5 Gew.-%, insbesondere bevorzugt mehr als 99,9 Gew.-% einer aromatischen Dihydroxyverbindung ausgewählt aus der Gruppe bestehend aus 4,4'-Dihydroxybiphenyl und 4,4'-Dihydroxydiphenylsulfon enthält, jeweils bezogen auf das Gesamtgewicht der Komponente (B1) im Reaktionsgemisch (R_{G}).

In einer insbesondere bevorzugten Ausführungsform besteht Komponente (B1) aus 4,4'-Dihydroxydiphenylsulfon.

### Komponente (B2)

Als Komponente (B2) enthält das Reaktionsgemisch (R_{G}) mindestens ein Polyalkylenoxid, das mindestens zwei Hydroxygruppen aufweist. Unter "mindestens ein Polyalkylenoxid" werden erfindungsgemäß sowohl genau ein Polyalkylenoxid, als auch Mischungen aus zwei oder mehreren Polyalkylenoxiden verstanden. Als Polyalkylenoxide sind erfindungsgemäß solche Polyalkylenoxide geeignet, die durch Polymerisation von Ethylenoxid, 1,2-Propylenoxid, 1,2-Butylenoxid, 2,3-Butylenoxid, 1,2-Pentenoxid, 2,3-Pentenoxid oder Mischungen dieser Monomere erhältlich sind. Als Polyalkylenoxide sind solche mit zwei Hydroxygruppen besonders bevorzugt. Solche Polyalkylenoxide werden auch als Polyetherdiole bezeichnet. Geeignete Polyalkylenoxide enthalten im Allgemeinen 1 bis 500 Alkylenoxideinheiten. Bevorzugt sind Alkylenoxide, die 2 bis 300, besonders bevorzugt 3 bis 150, insbesondere bevorzugt 5 bis 100 und am meisten bevorzugt 10 bis 80 Alkylenoxideinheiten enthalten.

Die im Reaktionsgemisch (R_{G}) enthaltenen Polyalkylenoxide weisen im Allgemeinen ein zahlenmittleres Molekulargewicht (Mₙ) von mindestens 200 g/mol auf. Bevorzugt sind Polyalkylenoxide mit einem zahlenmittleren Molekulargewicht (Mₙ) im Bereich von 200 bis 50000 g/mol, besonders bevorzugt im Bereich von 400 bis 40000 g/mol und insbesondere bevorzugt im Bereich von 600 bis 20000 g/mol.

Als Polyalkylenoxide sind Polyethylenglycol, Polypropylenglycol sowie Copolymere aus Polyethylenglycol und Polypropylenglycol bevorzugt.

Besonders bevorzugt sind Polyethylenglycolhomopolymere mit einem zahlenmittleren Molekulargewicht (Mₙ) im Bereich von 600 bis 20000 g/mol.

Da im Reaktionsgemisch (R_{G}) als Komponente (D) ein Metallcarbonat enthalten ist, können die Polyalkylenoxide im Reaktionsgemisch (R_{G}) teilweise in deprotonierter Form vorliegen.

Die Molekulargewichte der Polyalkylenoxide werden durch Bestimmung der OH-Zahl ermittelt. Die OH-Zahl der eingesetzten Polyakylenglycole (Polyalkylenoxide) wird mittels potentiometrischer Titration ermittelt. Dabei werden die OH-Gruppen zuerst mittels einer Acylierungsmischung aus Acetanhydrid und Pyridin verestert. Der Überschuss an Acetanhydrid wird dann durch Titration mit 1 molarer KOH bestimmt. Aus dem Verbrauch an KOH, der Menge an Acetanhydrid und der Probeneinwaage kann dann die OH-Zahl berechnet werden.

Die im Reaktionsgemisch (R_{G}) enthaltenen Polyalkylenoxide, die mindestens zwei Hydroxygruppen aufweisen, werden dem Reaktionsgemisch (R_{G}) als solche zugegeben. Das heißt die Polyalkylenoxide werden nicht in aktivierter Form eingesetzt. Unter "aktivierter Form" werden Hydroxygruppen verstanden, die durch eine chemische Reaktion in eine Abgangsgruppe, wie beispielsweise eine Mesylatgruppe, umgewandelt wurden.

Im Allgemeinen enthält Komponente (B2) mindestens 50 Gew.-% eines Polyalkylenoxids, das durch Polymerisation von Ethylenoxid, 1,2-Propylenoxid, 1,2-Butylenoxid, 2,3-Butylenoxid, 1,2-Pentenoxid, 2,3-Pentenoxid oder Mischungen dieser Monomeren erhältlich ist, bezogen auf das Gesamtgewicht der Komponente (B2) im Reaktionsgemisch (R_{G}).

Gegenstand der vorliegenden Erfindung ist somit auch ein Verfahren, das dadurch gekennzeichnet ist, dass Komponente (B2) mindestens 50 Gew.-% eines Polyalkylenoxids enthält, das durch Polymerisation von Ethylenoxid, 1,2-Propylenoxid, 1,2-Butylenoxid, 2,3-Butylenoxid, 1,2-Pentenoxid, 2,3-Pentenoxid oder Mischungen dieser Monomere erhältlich ist, bezogen auf das Gesamtgewicht der Komponente (B2) im Reaktionsgemisch (R_{G}).

Bevorzugt sind als Komponente (B2) Polyalkylenoxide, die durch Polymerisation von Ethylenoxid, 1,2-Propylenoxid oder Mischungen aus Ethylenoxid und 1,2-Propylenoxid zugänglich sind.

In einer besonders bevorzugten Ausführungsform der vorliegenden Erfindung enthält die Komponente (B2) mindestens 80 Gew.-%, bevorzugt mindestens 90 Gew.-%, mehr bevorzugt mindestens 98 Gew.-% eines Polyalkylenoxids, das mindestens zwei Hydroxygruppen aufweist, und dass durch Polymerisation von Ethylenoxid, 1,2-Propylenoxid oder Mischungen aus Ethylenoxid und 1,2-Propylenoxid erhältlich ist, jeweils bezogen auf das Gesamtgewicht der Komponente (B2) im Reaktionsgemisch (R_{G}).

In einer weiteren besonders bevorzugten Ausführungsform besteht die Komponente (B2) im Wesentlichen aus einem Polyalkylenoxid, das durch Polymerisation von Ethylenoxid, Propylenoxid oder Mischungen aus Ethylenoxid und Propylenoxid erhältlich ist. Unter "bestehend im Wesentlichen aus" wird vorliegend verstanden, dass die Komponente (B2) mehr als 99 Gew.-%, bevorzugt mehr als 99,5 Gew.-%, insbesondere bevorzugt mehr als 99,9 Gew.-% mindestens eines Polyalkylenoxids enthält, welches durch Polymerisation von Ethylenoxid, 1,2-Propylenoxid oder Mischungen aus Ethylenoxid und 1,2-Propylenoxid erhältlich ist, jeweils bezogen auf das Gesamtgewicht der Komponente (B2) im Reaktionsgemisch (R_{G}).

Bei dieser Ausführungsform ist Polyethylenglycol mit einem zahlenmittleren Molekulargewicht (Mₙ) im Bereich von 600 bis 20000 g/mol insbesondere bevorzugt.

### Komponente (C)

Als Komponente (C) enthält das Reaktionsgemisch (R_{G}) mindestens ein aprotisches polares Lösungsmittel. Unter "mindestens ein aprotisches polares Lösungsmittel" werden erfindungsgemäß genau ein aprotisches polares Lösungsmittel sowie Gemische aus zwei oder mehreren aprotischen polaren Lösungsmitteln verstanden.

Als aprotisches polares Lösungsmittel sind beispielsweise Anisol, Dimethylformamid, Dimethylsulfoxid, Sulfolan, N-Methyl-2-Pyrrolidon, N-Ethyl-2-Pyrrolidon sowie Mischungen dieser Lösungsmittel geeignet.

Als aprotisches polares Lösungsmittel sind N-Methyl-2-Pyrrolidon, N-Ethyl-2-Pyrrolidon sowie Mischungen dieser Lösungsmittel bevorzugt. Besonders bevorzugt als aprotisches polares Lösungsmittel ist N-Methyl-2-Pyrrolidon.

Gegenstand der vorliegenden Erfindung ist somit auch ein Verfahren, in dem das Reaktionsgemisch (R_{G}) als Komponente (C) N-Methyl-2-Pyrrolidon enthält.

In einer bevorzugten Ausführungsform enthält Komponente (C) mindestens 50 Gew.-% mindestens eines Lösungsmittels ausgewählt aus der Gruppe bestehend aus N-Methyl-2-Pyrrolidon und N-Ethyl-2-Pyrrolidon, bezogen auf das Gesamtgewicht der Komponente (C) im Reaktionsgemisch (R_{G}). Als Komponente (C) ist N-Methyl-2-Pyrrolidon besonders bevorzugt.

In einer weiteren Ausführungsform besteht Komponente (C) im Wesentlichen aus N-Methyl-2-Pyrrolidon. Unter "bestehend im Wesentlichen aus" wird vorliegend verstanden, dass die Komponente (C) mehr als 99 Gew.-%, insbesondere bevorzugt mehr als 99,5 Gew.-%, insbesondere bevorzugt mehr als 99,9 Gew.-% mindestens eines aprotischen polaren Lösungsmittels ausgewählt aus der Gruppe bestehend aus N-Methyl-2-Pyrrolidon und N-Ethyl-2-Pyrrolidon enthält, wobei N-Methyl-2-Pyrrolidon bevorzugt ist.

In einer bevorzugten Ausführungsform besteht Komponente (C) aus N-Methyl-2-Pyrrolidon. N-Methyl-2-Pyrrolidon wird auch als NMP oder N-Methylpyrrolidon bezeichnet.

Das Reaktionsgemisch (R_{G}) enthält erfindungsgemäß keine Substanz, die mit Wasser ein Azeotrop bildet. Bei der Kondensationsreaktion zwischen den Komponenten (A1), (B1) und (B2) entsteht im erfindungsgemäßen Verfahren Reaktionswasser. Bei den im Stand der Technik beschriebenen Verfahren wird zwingend ein Schleppmittel zugesetzt, um das bei der Kondensationsreaktion gebildete Reaktionswasser als Azeotrop zu entfernen.

Unter Azeotrop wird erfindungsgemäß ein Gemisch aus Wasser und einer oder mehreren weiteren Substanzen verstanden, das sich durch Destillation nicht trennen lassen. Unter Azeotrop wird erfindungsgemäß somit ein Gemisch aus Wasser und einer oder mehreren Substanzen verstanden, das sich beim Phasenübergang von flüssig nach gasförmig so verhält, als wäre es ein Reinstoff. In einer bevorzugten Ausführungsform enthält das Reaktionsgemisch (R_{G}) kein Toluol und kein Chlorbenzol.

### Komponente (D)

Das Reaktionsgemisch (R_{G}) enthält als Komponente (D) mindestens ein Metallcarbonat. Das Metallcarbonat ist bevorzugt wasserfrei. Als Metallcarbonate bevorzugt sind Alkali- und/oder Erdalkalicarbonate. Besonders bevorzugt als Metallcarbonate ist mindestens ein Metallcarbonat ausgewählt aus der Gruppe bestehend aus Natriumcarbonat, Kaliumcarbonat und Kalziumcarbonat. Besonders bevorzugt ist Kaliumcarbonat.

In einer bevorzugten Ausführungsform besteht Komponente (D) im Wesentlichen aus Kaliumcarbonat. Unter "bestehend im Wesentlichen aus" wird vorliegend verstanden, dass die Komponente (D) mehr als 99 Gew.-%, bevorzugt mehr als 99,5 Gew.-%, insbesondere bevorzugt mehr als 99,9 Gew.-% Kaliumcarbonat enthält, jeweils bezogen auf das Gesamtgewicht der Komponente (D) im Reaktionsgemisch (R_{G}).

In einer besonders bevorzugten Ausführungsform besteht Komponente (D) aus Kaliumcarbonat.

Als Kaliumcarbonat besonders bevorzugt ist Kaliumcarbonat mit einer volumengewichteten mittleren Teilchengröße von weniger als 200 µm. Die volumengewichtete mittlere Teilchengröße des Kaliumcarbonats wird dabei bestimmt mit einem Partikelgrößemessgerät in einer Suspension des Kaliumcarbonats in N-Methyl-2-Pyrrolidon.

In einer bevorzugten Ausführungsform enthält das Reaktionsgemisch (R_{G}) keine Alkalihydroxide und keine Erdalkalihydroxide.

Besonders bevorzugt ist ein Reaktionsgemisch (R_{G}), in dem
die Komponente (A1) mindestens 50 Gew.-%, bevorzugt mindestens 90 Gew.-%, besonders bevorzugt mindestens 95 Gew.-% 4,4'-Dichlordiphenylsulfon enthält, bezogen auf das Gesamtgewicht der Komponente (A1) im Reaktionsgemisch (R_{G}),
die Komponente (B1) mindestens 50 Gew.-%, bevorzugt mindestens 90 Gew.-%, besonders bevorzugt mindestens 95 Gew.-% 4,4'-Dihydroxydiphenylsulfon enthält, bezogen auf das Gesamtgewicht der Komponente (B1) im Reaktionsgemisch (R_{G}),
die Komponente (B2) mindestens 50 Gew.-%, bevorzugt mindestens 90 Gew.-%, besonders bevorzugt mindestens 95 Gew.-% Polyethylenglycol enthält, bezogen auf das Gesamtgewicht der Komponente (B2) im Reaktionsgemisch (R_{G}),

Komponente (C) im Wesentlichen aus N-Methylpyrrolidon besteht und
die Komponente (D) im Wesentlichen aus Kaliumcarbonat besteht,
wobei das Reaktionsgemisch (R_{G}) keine Substanz enthält, die mit Wasser ein Azeotrop bildet.

Gegenstand der vorliegenden Erfindung ist somit auch ein Verfahren, in dem die Komponente (A1) 4,4'-Dichlordiphenylsulfon, die Komponente (B1) 4,4'-Dihydroxydiphenylsulfon und die Komponente (B2) ein Polyethylenglycol ist.

Die Verhältnisse der Komponenten (A1), (B1) und (B2) im Reaktionsgemisch (R_{G}) können in weiten Bereichen variieren. Im Allgemeinen enthält das Reaktionsgemisch (R_{G}) pro 1 Mol der Komponente (A1) 0,7 bis 0,995 Mol der Komponente (B1) und 0,005 bis 0,3 Mol der Komponente (B2).

Gegenstand der vorliegenden Erfindung ist somit auch ein Verfahren, in dem das Reaktionsgemisch (R_{G}) pro ein Mol der Komponente (A1) 0,7 bis 0,995 Mol der Komponente (B1) und 0,005 bis 0,3 Mol der Komponente (B2) enthält.

### Polyarylethersulfon-Polyalkylenoxid-Blockcopolymer (PPC)

Zur Herstellung des erfindungsgemäßen Polyarylethersulfon-Polyalkylenoxid-Blockcopolymers (PPC) wird das Reaktionsgemisch (R_{G}) unter Bedingungen, der sogenannten Carbonat-Methode zur Reaktion gebracht. Die Umsetzung (Polykondensationsreaktion) erfolgt dabei im Allgemeinen bei Temperaturen im Bereich von 80 bis 250 °C, bevorzugt im Bereich von 100 bis 220 °C, wobei die Obergrenze der Temperatur durch den Siedpunkt des Lösungsmittels bei Normaldruck (1013,25 mbar) bestimmt wird. Die Umsetzung wird im Allgemeinen bei Normaldruck durchgeführt. Die Umsetzung erfolgt vorzugsweise in einem Zeitintervall von 2 bis 12 Stunden, insbesondere im Bereich von 3 bis 10 Stunden.

Die Isolierung des erfindungsgemäß erhaltenen Polyarylethersulfon-Polyalkylenoxid-Blockcopolymers (PPC) kann beispielsweise durch Fällung der Polymerlösung in Wasser oder Gemischen von Wasser mit weiteren Lösungsmitteln erfolgen. Das ausgefällte PPC kann anschließend mit Wasser extrahiert und danach getrocknet werden. In einer Ausführungsform der Erfindung kann die Fällung auch in einem sauren Medium vorgenommen werden. Geeignete Säuren sind beispielsweise organische oder anorganische Säuren, beispielsweise Carbonsäuren wie Essigsäure, Propionsäure, Bernsteinsäure oder Zitronensäure sowie Mineralsäuren wie beispielsweise Salzsäure, Schwefelsäure oder Phosphorsäure.

Mit dem erfindungsgemäßen Verfahren werden hohe Einbauraten des Polyalkylenoxids (Komponente (B2)) erreicht. Unter Einbauraten im Hinblick auf das Polyalkylenoxid wird vorliegend die Menge des Polyalkylenoxids verstanden, die nach der Polykondensation in kovalent gebundener Form im Polyarylethersulfon-Polyalkylenoxid-Blockcopolymer (PPC) vorliegt, bezogen auf die ursprünglich im Reaktionsgemisch (R_{G}) enthaltene Menge des Polyalkylenoxids (Komponente (B2)). Mit dem erfindungsgemäßen Verfahren werden Einbauraten von ≥ 85 %, bevorzugt ≥ 90 % erreicht.

Gegenstand der vorliegenden Erfindung ist somit auch ein Verfahren zur Herstellung von Polyarylethersulfon-Polyalkylenoxid-Blockcopolymeren (PPC), bei dem mindestens 85 Gew.-%, bevorzugt mindestens 90 Gew.-%, der im Reaktionsgemisch (R_{G}) enthaltenen Komponente (B2) in das Polyarylethersulfon-Polyalkylenoxid-Blockcopolymer (PPC) eingebaut werden.

Durch das erfindungsgemäße Verfahren werden Polyarylethersulfon-Polyalkylenoxid-Blockcopolymere (PPC) mit niedrigen Polydispersitäten (Q) und hoher Glastemperatur (T_{g}) erhalten. Die Polyarylethersulfon-Polyalkylenoxid-Blockcopolymere weisen darüber hinaus sehr geringe Mengen an Fremdstoffen, wie beispielsweise Schleppmitteln wie Toluol oder Chlorbenzol auf.

Gegenstand der vorliegenden Erfindung ist somit auch ein Polyarylethersulfon-Polyalkylenoxid-Blockcopolymer (PPC), das nach dem erfindungsgemäßen Verfahren erhältlich ist. Das Polyarylethersulfon-Polyalkylenoxid-Blockcopolymer (PPC) weist im Allgemeinen eine Polydispersität (Q) von ≤ 4, bevorzugt von ≤ 3,5 auf.

Die Polydispersität (Q) ist definiert als Quotient aus dem gewichtsmittleren Molekulargewicht (M_{w}) und dem zahlenmittleren Molekulargewicht (Mₙ). In einer bevorzugten Ausführungsform liegt die Polydispersität (Q) des Polyarylethersulfon-Polyalkylenoxid-Blockcopolymers (PPC) im Bereich von 2,0 bis ≤ 4, bevorzugt im Bereich von 2,0 bis ≤ 3,5.

Das gewichtsmittlere Molekulargewicht (M_{w}) und das zahlenmittlere Molekulargewicht (Mₙ) werden mittels Gelpermeationschromatographie gemessen.

Die Polydispersität (Q) und die mittleren Molekulargewichte des Polyarylethersulfon-Polyalkylenoxid-Blockcopolymers (PPC) wurden mittels Gelpermeationschromatographie (GPC) in Dimethylacetamid (DMAc) gemessen. Als mobile Phase (Eluent) wurde DMAc, welches 0,5 Gew.-% Lithiumbromid enthält, eingesetzt. Die Konzentration der Polyarylethersulfon-Polyalkylenoxid-Blockcopolymere (PPC-Lösung) betrug 4 mg pro Milliliter Lösung. Nach Filtration (Porengröße 0,2 µm) wurden 100 µl dieser Lösung in das GPC-System injiziert. Zur Trennung wurden vier unterschiedliche Säulen (beheizt auf 80 °C) verwendet. (GRAM Vorsäule, GRAM 30A, GRAM 1000A, GRAM 1000A; Trennmaterial: Polyestercopolymere der Fa. PSS). Das GPC-System wurde mit einer Durchflussrate von 1 ml pro Minute betrieben. Als Detektionssystem wurde ein DRI-Agilent 1100 verwendet. Zur Kalibrierung wurden PMMA-Standards der Fa. PSS mit einem Molekulargewicht Mₙ im Bereich von 800 bis 1820000 g/mol eingesetzt.

Das nach dem erfindungsgemäßen Verfahren erhältliche Polyarylethersulfon-Polyalkylenoxid-Blockcopolymer (PPC) weist im Allgemeinen gewichtsmittlere Molekulargewichte (M_{w}) von 10 000 bis 150 000 g/mol, bevorzugt im Bereich von 15 000 bis 120 000 g/mol, besonders bevorzugt im Bereich von 20 000 bis 90 000 g/mol auf. Die gewichtsmittleren Molekulargewichte (M_{w}) werden mittels Gelpermeationschromatographie (GPC) gemessen. Die Messung erfolgt dabei wie vorstehend beschrieben.

Die erfindungsgemäßen Copolymere weisen eine erhöhte Glastemperatur (T_{g}) auf. Die Messung der Glastemperatur (T_{g}) erfolgte in einer DSC 2000 (TA Instruments) bei einer Aufheizrate von 20 K/min. Zur Messung werden etwa 5 mg der Substanz in einen Aluminium-Tiegel verschlossen. Im ersten Heizlauf werden die Proben auf 250 °C erhitzt, danach rasch auf-100 °C abgekühlt und dann im zweiten Heizlauf mit 20 k/min auf 250 °C erwärmt. Der jeweilige T_{g}-Wert wird aus dem zweiten Heizlauf bestimmt.

Die Erfindung betrifft zudem Polyarylethersulfon-Polyalkylenoxid-Blockcopolymere (PPC), die im Mittel 1 bis 3 Polyalkylenoxid-Blöcke und 1 bis 4 Polyarylethersulfon-Blöcke enthalten.

Die Polyarylethersulfon-Blöcke entstammen dabei der Polykondensationsreaktion zwischen den Komponenten (A1) und (B1). Die Polyalkylenoxid-Blöcke entstammen der Komponente (B2).

Die vorliegende Erfindung wird durch die nachfolgenden Ausführungsbeispiele näher erläutert, ohne sie jedoch hierauf zu beschränken.

### Eingesetzte Komponenten:

- DCDPS:: 4,4'-Dichlordiphenylsulfon,
- DHDPS:: 4,4'-Dihydroxydiphenylsulfon,
- PEG 2050:: Polyethylenglycol, zahlenmittleres Molekulargewicht Mₙ 2050 g/mol,
- PEG 4600:: Polyethylenglycol, zahlenmittleres Molekulargewicht Mₙ 4600 g/mol,
- PEG 8000:: Polyethylenglycol, zahlenmittleres Molekulargewicht Mₙ 8000 g/mol,

- Kaliumcarbonat :: K₂CO₃, wasserfrei, mittlere Partikelgröße 32,4 µm,
- NMP:: N-Methylpyrrolidon, wasserfrei,
- PPC:: Polyarylethersulfon-Polyethylenoxid-Blockcopolymer.

Der Anteil an flüchtigen Bestandteilen, wie beispielsweise Toluol, wurde mittels Headspace-Gaschromatographie bestimmt. T_{g} Mₙ, M_{w} und Q wurden wie vorstehend beschrieben bestimmt.

Die Viskositätszahl VZ wurde nach DIN ISO 1628-1 in einer 1-Gew.-%igen NMP-Lösung gemessen.

Das Einbauverhältnis (die Einbaurate) von PEG wurde mittels ¹H-NMR in CDCl3 bestimmt. Dabei wird die Signalintensität der aliphatischen PEG-Einheiten im Verhältnis zur Intensität der aromatischen Einheiten aus dem Polyarylether betrachtet. Dabei ergibt sich ein Wert für den PEG-Anteil in Mol-%, welcher mit den bekannten Molgewichten der entsprechenden Struktureinheiten in Gew.-% umgerechnet werden kann. Die in Tabelle 1 aufgeführten Einbauraten ergeben sich dann als Quotient aus dem bestimmten Gewichtsanteil des PEG und dem theoretisch berechneten Wert.

Die Isolierung der Polyarylethersulfon-Polyalkylenoxid-Blockcopolymere (PPC) erfolgt, soweit nicht anders angegeben durch Zertropfung einer NMP-Lösung der Polymere in VE-Wasser bei Raumtemperatur. Die Fallhöhe beträgt 0,5 m. Der Durchsatz beträgt ca. 2,5 l pro Stunde. Die erhaltenen Perlen werden anschließend bei 85 °C für zwanzig Stunden mit Wasser extrahiert (Wasserdurchsatz 160 l/h). Danach werden die Perlen bei einer Temperatur unterhalb der Glastemperatur T_{g} auf eine Restfeuchte von weniger als 0,1 Gew.-% getrocknet.

### Vergleichsbeispiel 1: Herstellung PPC in Gegenwart von Toluol als Schleppmittel

In einem 4L-Reaktor mit Innenthermometer, Gaseinleitungsrohr, Rückflusskühler und Wasserabscheider wurden 574,16 g DCDPS, 490,33 g DHDPS, 82 g PEG 2050 und 290,24 g Kaliumcarbonat unter Stickstoffatmosphäre in 1053 ml NMP suspendiert. Als Schleppmittel wurden 250 ml Toluol zugegeben. Der Ansatz wurde auf 160 °C erhitzt und für 1 h bei dieser Temperatur gehalten. Während dieser Zeit wird ein Azeotrop aus Toluol und Wasser abdestilliert (abdestillierte Toluolmenge ca. 100 ml). Abschließend wird der Ansatz auf 175 °C erhitzt und für 1 h bei dieser Temperatur gehalten. Nachfolgend wird die Temperatur auf 190 °C erhöht, wobei weiteres Toluol abdestilliert wird. Als Reaktionsdauer wird die Verweilzeit bei einer Temperatur von 190 °C betrachtet. Nach 6 h Reaktionsdauer wird die Reaktion durch Verdünnen mit kaltem NMP (1947 ml) abgebrochen. Anschließend wird Stickstoff eingeleitet (20 l pro Stunde) und der Ansatz abgekühlt. Das entstandene Kaliumchlorid wird abfiltriert.

### Vergleichsbeispiel 2: Herstellung PPC in Gegenwart von Toluol als Schleppmittel

In einem 4L-Reaktor mit Innenthermometer, Gaseinleitungsrohr, Rückflusskühler und Wasserabscheider wurden 574,16 g DCDPS, 485,33 g DHDPS, 123 g PEG 2050 und 290,24 g Kaliumcarbonat unter Stickstoffatmosphäre in 1053 ml NMP suspendiert. Als Schleppmittel wurden 250 ml Toluol zugegeben. Der Ansatz wurde auf 160 °C erhitzt und für 1 h bei dieser Temperatur gehalten. Während dieser Zeit wird ein Azeotrop aus Toluol und Wasser abdestilliert (abdestillierte Toluolmenge ca. 100 ml). Abschließend wird der Ansatz auf 175 °C erhitzt und für 1 h bei dieser Temperatur gehalten. Nachfolgend wird die Temperatur auf 190 °C erhöht, wobei weiteres Toluol abdestilliert wird. Als Reaktionsdauer wird die Verweilzeit bei einer Temperatur von 190 °C betrachtet. Nach 6 h Reaktionsdauer wird die Reaktion durch Verdünnen mit kaltem NMP (1947 ml) abgebrochen. Anschließend wird Stickstoff eingeleitet (20 l pro Stunde) und der Ansatz abgekühlt. Das entstandene Kaliumchlorid wird abfiltriert.

### Beispiel 3 (erfindungsgemäß): Herstellung PPC in Abwesenheit eines Schleppmittels

In einem 4L-Reaktor mit Innenthermometer, Gaseinleitungsrohr und Rückflusskühler mit Wasserabscheider wurden 574,16 g DCDPS, 490,33 g DHDPS, 82 g PEG 2050 und 290,24 g Kaliumcarbonat unter Stickstoffatmosphäre in 1053 ml NMP suspendiert. Der Ansatz wird binnen 1 h auf 190 °C erhitzt. Als Reaktionsdauer wird die Verweilzeit bei 190 °C betrachtet. Das Reaktionswasser wird abdestilliert und der Füllstand durch Hinzufügen von NMP während der Reaktion konstant gehalten. Nach 6 h Reaktionsdauer wird die Reaktion durch Verdünnen mit kaltem NMP (1947 ml) abgebrochen. Anschließend wird Stickstoff eingeleitet (20 l pro Stunde) und der Ansatz abgekühlt. Das entstandene Kaliumchlorid wird abfiltriert.

### Beispiel 4 (erfindungsgemäß): Herstellung PPC in Abwesenheit eines Schleppmittels

In einem 4L-Reaktor mit Innenthermometer, Gaseinleitungsrohr und Rückflusskühler mit Wasserabscheider wurden 574,16 g DCDPS, 485,33 g DHDPS, 123 g PEG 2050 und 290,24 g Kaliumcarbonat unter Stickstoffatmosphäre in 1053 ml NMP suspendiert. Der Ansatz wird binnen 1 h auf 190 °C erhitzt. Als Reaktionsdauer wird die Verweilzeit bei 190 °C betrachtet. Das Reaktionswasser wird abdestilliert und der Füllstand durch Hinzufügen von NMP während der Reaktion konstant gehalten. Nach 6 h Reaktionsdauer wird die Reaktion durch Verdünnen mit kaltem NMP (1947 ml) abgebrochen. Anschließend wird Stickstoff eingeleitet (20 l pro Stunde) und der Ansatz abgekühlt. Das entstandene Kaliumchlorid wird abfiltriert.

### Beispiel 5 (erfindungsgemäß): Herstellung PPC in Abwesenheit eines Schleppmittels

In einem 4L-Reaktor mit Innenthermometer, Gaseinleitungsrohr und Rückflusskühler mit Wasserabscheider wurden 574,16 g DCDPS, 475,32 g DHDPS, 205 g PEG 2050 und 290,24 g Kaliumcarbonat unter Stickstoffatmosphäre in 1053 ml NMP suspendiert. Der Ansatz wird binnen 1 h auf 190 °C erhitzt. Als Reaktionsdauer wird die Verweilzeit bei 190 °C betrachtet. Das Reaktionswasser wird abdestilliert und der Füllstand durch Hinzufügen von NMP während der Reaktion konstant gehalten. Nach 6 h Reaktionsdauer wird die Reaktion durch Verdünnen mit kaltem NMP (1947 ml) abgebrochen. Anschließend wird Stickstoff eingeleitet (20 l pro Stunde) und der Ansatz abgekühlt. Das entstandene Kaliumchlorid wird abfiltriert.

### Beispiel 6 (erfindungsgemäß): Herstellung PPC in Abwesenheit eines Schleppmittels

In einem 4L-Reaktor mit Innenthermometer, Gaseinleitungsrohr und Rückflusskühler mit Wasserabscheider wurden 574,16 g DCDPS, 490,33 g DHDPS, 184 g PEG 4600 und 290,24 g Kaliumcarbonat unter Stickstoffatmosphäre in 1053 ml NMP suspendiert. Der Ansatz wird binnen 1 h auf 190 °C erhitzt. Als Reaktionsdauer wird die Verweilzeit bei 190 °C betrachtet. Das Reaktionswasser wird abdestilliert und der Füllstand durch Hinzufügen von NMP während der Reaktion konstant gehalten. Nach 6 h Reaktionsdauer wird die Reaktion durch Verdünnen mit kaltem NMP (1947 ml) abgebrochen. Anschließend wird Stickstoff eingeleitet (20 l pro Stunde) und der Ansatz abgekühlt. Das entstandene Kaliumchlorid wird abfiltriert.

### Beispiel 7 (erfindungsgemäß): Herstellung PPC in Abwesenheit eines Schleppmittels

In einem 4L-Reaktor mit Innenthermometer, Gaseinleitungsrohr und Rückflusskühler mit Wasserabscheider wurden 574,16 g DCDPS, 490,33 g DHDPS, 320 g PEG 8000 und 290,24 g Kaliumcarbonat unter Stickstoffatmosphäre in 1053 ml NMP suspendiert. Der Ansatz wird binnen 1 h auf 190 °C erhitzt. Als Reaktionsdauer wird die Verweilzeit bei 190 °C betrachtet. Das Reaktionswasser wird abdestilliert und der Füllstand durch Hinzufügen von NMP während der Reaktion konstant gehalten. Nach 6 h Reaktionsdauer wird die Reaktion durch Verdünnen mit kaltem NMP (1666 ml) abgebrochen. Anschließend wird Stickstoff eingeleitet (20 l pro Stunde) und der Ansatz abgekühlt. Das entstandene Kaliumchlorid wird abfiltriert.

### Vergleichsbeispiel 8: Herstellung PPC in Gegenwart von Chlorbenzol als Schleppmittel

Es wird eine Lösung aus 102,5 g PEG 2050 in 500 ml Dimethylsulfoxid (DMSO) hergestellt. Zu dieser Lösung werden 18,15 g 30%ige Natriummethylatlösung in Methanol gegeben. Das entstehende Methanol wird bei einer Sumpftemperatur von 85 °C abdestilliert, unter Erhalt eines PEG 2050-Alkoholats.

In einem 4L-Reaktor mit Innenthermometer, Gaseinleitungsrohr und Rückflusskühler mit Wasserabscheider werden 216,85 g Bisphenol A, 600 g DMSO und 725 g Chlorbenzol unter Stickstoffatmosphäre zusammengegeben und erwärmt. Bei einer Innentemperatur von 75 °C werden 179,25 g wässrige NaOH (44,7%ig) innerhalb von 10 Minuten zugegeben und mit 50 ml Chlorbenzol nachgespült wird. Ab einer Innentemperatur von 120 °C wird eine Stunde lang ein Azeotrop aus Wasser und Chlorbenzol abdestilliert und die Temperatur auf 140 °C erhöht. Das Chlorbenzol wird in das Reaktionsgefäß zurückgeführt. Nachfolgend wird das Chlorbenzol abdestilliert, bis die Innentemperatur 145 °C erreicht.

Danach wird die separat zubereitete Lösung des PEG 2050-Alkoholats bei 100 °C zugegeben. Anschließend wird eine 80 °C warme Lösung von 279,98 g DCDPS in 600 g trockenem Chlorbenzol innerhalb von 20 Minuten zugegeben und mit 50 ml Chlorbenzol aus dem Abscheider nachgespült. Das Chlorbenzol wird abdestilliert (abdestillierte Chlorbenzolmenge: ca. 500 g), bis eine Innentemperatur von 155 °C erreicht wird. Die Temperatur wird für eine Stunde gehalten, danach wird eine Lösung aus 2,875 g DCDPS in 5 ml trockenem Chlorbenzol zugegeben, die Temperatur eine weitere Stunde gehalten und anschließend nochmals eine Lösung aus 2,175 g DCDPS in 5 ml trockenem Chlorbenzol zugegeben, die Temperatur für eine weitere Stunde gehalten und der letzte Verfahrensschritt nochmals wiederholt.

Anschließend werden 1000 g DMSO hinzugefügt und das Chlorbenzol bei einer Innentemperatur von 165 °C abdestilliert.

Das Reaktionsgemisch wird auf 80 °C abgekühlt. Die Isolierung der Polyarylethersulfon-Polyalkylenoxid-Blockcopolymere (PPC) erfolgt durch Zertropfung der Lösung in 5 l VE-Wasser, welches mit 200 ml Essigsäure versetzt ist, bei Raumtemperatur. Die Fallhöhe beträgt 0,5 m, der Durchsatz beträgt ca. 2,5 l pro Stunde. Die erhaltenen Perlen werden anschließend bei 85 °C für 20 Stunden mit Wasser extrahiert (Wasserdurchsatz: 160 l/h). Danach werden die Perlen bei einer Temperatur unterhalb der Glastemperatur (T_{g}) auf eine Restfeuchte von weniger als 0,1 Gew.-% getrocknet.

### Vergleichsbeispiel 9: Herstellung PPC in Gegenwart von Chlorbenzol als Schleppmittel

Es wird eine Lösung aus 160,2 g PEG 8000 in 500 ml DMSO hergestellt. Zu dieser Lösung werden 7,25 g 30%ige Natriummethylatlösung in Methanol gegeben. Das entstehende Methanol wird bei einer Sumpftemperatur von 85 °C abdestilliert, unter Erhalt eines PEG 8000-Alkoholats.

In einem 4L-Reaktor mit Innenthermometer, Gaseinleitungsrohr und Rückflusskühler mit Wasserabscheider werden 223,69 g Bisphenol A, 600 g Dimethylsulfoxid und 725 g Chlorbenzol unter Stickstoffatmosphäre zusammengegeben und erwärmt. Bei einer Innentemperatur von 75 °C werden 179,25 g wässrige NaOH (44,7%ig) innerhalb von 10 Minuten zugegeben und mit 50 ml Chlorbenzol nachgespült. Ab einer Innentemperatur von 120 °C wird eine Stunde lang ein Azeotrop aus Wasser und Chlorbenzol abdestilliert und die Temperatur auf 140 °C erhöht. Das Chlorbenzol wird in das Reaktionsgefäß zurückgeführt. Anschließend wird das Chlorbenzol abdestilliert, bis die Innentemperatur 145 °C erreicht.

Anschließend wird die separat zubereitete Lösung des PEG 8000-Alkoholats bei 100 °C zugegeben. Dann wird eine 80 °C warme Lösung von 279,98 g DCDPS in 600 g trockenem Chlorbenzol innerhalb von 20 Minuten zugegeben und mit 50 ml Chlorbenzol aus dem Abscheider nachgespült. Das Chlorbenzol wird abdestilliert (abdestillierte Chlorbenzolmenge: ca. 500 g), bis eine Innentemperatur von 155 °C erreicht wird. Diese Temperatur wird für eine Stunde gehalten, danach wird eine Lösung aus 2,875 g DCDPS in 5 ml trockenem Chlorbenzol zugegeben, die Temperatur für eine weitere Stunde gehalten und anschließend nochmals eine Lösung aus 2,175 g DCDPS in 5 ml trockenem Chlorbenzol zugegeben, die Temperatur für eine weitere Stunde gehalten und der letzte Verfahrensschritt nochmals wiederholt.

Anschließend werden 1000 g DMSO hinzugefügt und das Chlorbenzol bei einer Innentemperatur von 165 °C abdestilliert.

Das Reaktionsgemisch wird auf 80 °C abgekühlt und die Isolierung der Polyarylethersulfon-Polyalkylenoxid-Blockcopolymere (PPC) erfolgt analog zu der in Vergleichsbeispiel 8 beschriebenen Vorgehensweise.

### Beispiel 10 (erfindungsgemäß): Herstellung PPC in Abwesenheit eines Schleppmittels

In einem 4L-Reaktor mit Innenthermometer, Gaseinleitungsrohr und Rückflusskühler mit Wasserabscheider wurden 574,3 g DCDPS, 433,70 g Bisphenol A, 205 g PES 2050 und 297,15 g Kaliumcarbonat unter Stickstoffatmosphäre in 1053 ml NMP suspendiert. Der Ansatz wird binnen 1 h auf 190 °C erhitzt. Als Reaktionsdauer wird die Verweilzeit bei 190 °C betrachtet. Das Reaktionswasser wird abdestilliert und der Füllstand durch Zufügen von NMP während der Reaktion konstant gehalten. Nach 6 h Reaktionsdauer wird die Reaktion durch Verdünnen mit kaltem NMP (1947 ml) abgebrochen. Anschließend wird Stickstoff eingeleitet (20 l/h) und der Ansatz abgekühlt. Das entstandene Kaliumchlorid wird abfiltiert.

### Beispiel 11 (erfindungsgemäß): Herstellung PPC in Abwesenheit eines Schleppmittels

In einem 4L-Reaktor mit Innenthermometer, Gaseinleitungsrohr und Rückflusskühler mit Wasserabscheider wurden 574,30 g DCDPS, 447,38 g Bisphenol A, 320 g PEG 8000 und 297,15 g Kaliumcarbonat unter Stickstoffatmosphäre in 1053 ml NMP suspendiert. Der Ansatz wird binnen 1 h auf 190 °C erhitzt. Als Reaktionsdauer wird die Verweilzeit bei 190 °C betrachtet. Das Reaktionswasser wird abdestilliert und der Füllstand durch Zufügen von NMP während der Reaktion konstant gehalten. Nach 6 h Reaktionsdauer wird die Reaktion durch Verdünnen mit kaltem NMP (1947 ml) abgebrochen. Anschließend wird Stickstoff eingeleitet (20 l/h) und der Ansatz abgekühlt. Das entstandene Kaliumchlorid wird abfiltiert.

Die Eigenschaften der erhaltenen Polyarylethersulfon-Polyethylenoxid-Blockcopolymere (PPC) sind in der nachfolgenden Tabelle angegeben.

**Tabelle 1**

| **Beispiel** | **V1** | **V2** | **3** | **4** | **5** | **6** | **7** | **V8** | **V9** | **10** | **11** |
|---|---|---|---|---|---|---|---|---|---|---|---|
| **VZ [ml/g]** | 64,2 | 73,4 | 63,2 | 79,5 | 75,4 | 87,5 | 74,5 | 55,7 | 61,2 | 61,0 | 84 |
| **PEG-Anteil [Gew.-%]** | 8,1 | 11,4 | 8,2 | 11,6 | 18,2 | 16,3 | 24,7 | 16,1 | 22,4 | 18,3 | 25,3 |
| **Q [M_{W}/Mₙ]** | 4,3 | 4,5 | 3,0 | 3,5 | 2,9 | 3,4 | 3,2 | 4,2 | 4,3 | 3,3 | 3,2 |
| **Einbaurate [%]** | 99 | 98 | 99 | 98 | 99 | 89 | 95 | 85,6 | 84,2 | 95 | 95 |
| **T_{g} [°C]** | 168 | 147 | 175 | 156 | 129 | 132 | n.b. | 89 | 71 | 101 | 74 |
| **Toluol [ppm]** | 5 | 7 | 0 | 0 | 0 | 0 | 0 | 0 | 0 | 0 | 0 |

Mit dem erfindungsgemäßen Verfahren sind Polyarylethersulfon-Polyethylenoxid-Blockcopolymere zugänglich, die eine geringere Polydispersität (Q) aufweisen. Darüber hinaus zeichnen sich die Blockcopolymere durch hohe Glastemperaturen (T_{g}) aus. Mit dem erfindungsgemäßen Verfahren werden zudem gute Einbauraten und gute Viskositätszahlen (VZ) erreicht.

Ein Vergleich von Vergleichsbeispiel 1 mit dem erfindungsgemäßen Beispiel 3 sowie von Vergleichsbeispiel 2 mit dem erfindungsgemäßen Beispiel 4 zeigt, dass bei den nach der Carbonat-Methode in Gegenwart eines Schleppmittels hergestellten Polyarylether-Polyethylenoxid-Blockcopolymeren (PPC) (Vergleichsbeispiel 1 und Vergleichsbeispiel 2) die Glasübergangstemperaturen (T_{g}) niedriger sind als bei den erfindungsgemäß hergestellten PPC (Beispiel 3 und Beispiel 4).

Es ist bekannt, dass die Glasübergangstemperatur (T_{g}) linear von der Länge der Polyaryletherblöcke abhängig ist und mit dieser zunimmt. Da die Glastemperatur der erfindungsgemäß hergestellten Polyarylether-Polyethylenoxid-Blockcopolymere größer ist als die der PPC der Vergleichsbeispiele, zeigt dies, dass die Polyaryletherblöcke länger sind als bei der Synthese mit Schleppmittel.

Im Vergleich zu den Polyarlylenethersulfon-Polyethylenoxid-Blockcopolymeren (PPC), wie sie gemäß dem in EP 0739925 beschriebenen Verfahren erhalten werden (Vergleichsbeipiel 8 und Vergleichsbeispiel 9), weisen die Polyarylethersulfon-Polyethylenoxid-Blockcopolymere (PPC), die erfindungsgemäß hergestellt wurden (Beispiel 10 und Beispiel 11), eine geringere Polydispersität (Q) auf. Außerdem zeichnen sie sich durch höhere Glastemperaturen (T_{g}) aus. Zudem werden höhere Einbauraten und Viskositätszahlen (VZ) erreicht. Die niedrigere Glastemperatur der nach EP 0739925 hergestellten Polyarylethersulfon-Polyethylenoxid-Blockcopolymere weist zudem auf einen unregelmäßigen Einbau der PEG-Segmente hin. Die erfindungsgemäß hergestellten Polyarlylenethersulfon-Polyethylenoxid-Blockcopolymeren enthalten somit regelmäßiger eingebaute PEG-Segmente.

## Patentansprüche

1. Verfahren zur Herstellung von Polyarylethersulfon-Polyalkylenoxid-Blockcopolymeren (PPC) umfassend die Polykondensation eines Reaktionsgemischs (R_{G}) enthaltend die Komponenten:
(A1) mindestens eine aromatische Dihalogenverbindung,
(B1) mindestens eine aromatische Dihydroxyverbindung,
(B2) mindestens ein Polyalkylenoxid, das mindestens zwei Hydroxygruppen aufweist,
(C) mindestens ein aprotisches polares Lösungsmittel und
(D) mindestens ein Metallcarbonat,
wobei das Reaktionsgemisch (R_{G}) keine Substanz enthält, die mit Wasser ein Azeotrop bildet.

2. Verfahren gemäß Anspruch 1, **dadurch gekennzeichnet, dass** Komponente (A1) mindestens 50 Gew.-% mindestens einer aromatischen Dihalogensulfon-Verbindung ausgewählt aus der Gruppe bestehend aus 4,4'-Dichlordiphenylsulfon und 4,4'-Difluordiphenylsulfon enthält, bezogen auf das Gesamtgewicht der Komponente (A1) im Reaktionsgemisch (R_{G}).

3. Verfahren gemäß Anspruch 1 oder Anspruch 2, **dadurch gekennzeichnet, dass** Komponente (B1) mindestens 50 Gew.-% einer aromatischen Dihydroxyverbindung ausgewählt aus der Gruppe bestehend aus 4,4'-Dihydroxybiphenyl und 4,4'-Dihydroxydiphenylsulfon enthält, bezogen auf das Gesamtgewicht der Komponente (B1) im Reaktionsgemisch (R_{G}).

4. Verfahren gemäß einem der Ansprüche 1 bis 3, **dadurch gekennzeichnet, dass** Komponente (B2) mindestens 50 Gew.-% eines Polyalkylenoxids enthält, das durch Polymerisation von Ethylenoxid, 1,2-Propylenoxid, 1,2-Butylenoxid, 2,3-Butylenoxid, 1,2-Pentenoxid, 2,3-Pentenoxid oder Mischungen dieser Monomere erhältlich ist, bezogen auf das Gesamtgewicht der Komponente (B2) im Reaktionsgemisch (R_{G}).

5. Verfahren gemäß einem der Ansprüche 1 bis 4, **dadurch gekennzeichnet, dass** das Reaktionsgemisch (R_{G}) als Komponente (C) N-Methyl-2-Pyrrolidon enthält.

6. Verfahren gemäß einem der Ansprüche 1 bis 5, **dadurch gekennzeichnet, dass** das Reaktionsgemisch (R_{G}) als Komponente (D) Kaliumcarbonat enthält.

7. Verfahren gemäß einem der Ansprüche 1 bis 6, **dadurch gekennzeichnet, dass** die Komponente (A1) 4,4'-Dichlordiphenylsulfon, die Komponente (B1) 4,4'-Dihydroxydiphenylsulfon und die Komponente (B2) ein Polyethylenglycol ist.

8. Verfahren gemäß einem der Ansprüche 1 bis 7, **dadurch gekennzeichnet, dass** das Reaktionsgemisch (R_{G}) pro ein Mol der Komponente (A1) 0,7 bis 0,995 Mol der Komponente (B1) und 0,005 bis 0,3 Mol der Komponente (B2) enthält.

9. Verfahren gemäß einem der Ansprüche 1 bis 8, **dadurch gekennzeichnet, dass** das Polyarylethersulfon-Polyalkylenoxid-Blockcopolymer (PPC) eine Polydispersität (Q) von ≤ 4, bevorzugt von ≤ 3,5 aufweist, wobei Q definiert ist als der Quotient aus dem gewichtsmittleren Molekulargewicht M_{w} und dem zahlenmittleren Molekulargewicht Mₙ.

10. Verfahren gemäß einem der Ansprüche 1 bis 9, **dadurch gekennzeichnet, dass** bei der Polykondensation mindestens 85 Gew.-% der im Reaktionsgemisch (R_{G}) enthaltenen Komponente (B2) in das Polyarylethersulfon-Polyalkylenoxid-Blockcopolymer (PPC) eingebaut werden.

11. Polyarylethersulfon-Polyalkylenoxid-Blockcopolymer (PPC) erhältlich nach einem der Ansprüche 1 bis 10.

12. Polyarylethersulfon-Polyalkylenoxid-Blockcopolymer (PPC) gemäß Anspruch 11, **dadurch gekennzeichnet, dass** es ein gewichtsmittleres Molekulargewicht (M_{w}) im Bereich von 10 000 bis 150 000 g/mol aufweist.

13. Polyarylethersulfon-Polyalkylenoxid-Blockcopolymer (PPC) gemäß einem der Ansprüche 11 oder 12, **dadurch gekennzeichnet, dass** es eine Polydispersität (Q) im Bereich von 2,0 bis ≤ 4 aufweist.

## Claims

1. A method for preparing polyarylethersulfone-polyalkylene oxide block copolymers (PPC) comprising the polycondensation of a reaction mixture (R_{G}) comprising the components:
(A1) at least one aromatic dihalogen compound,
(B1) at least one aromatic dihydroxyl compound,
(B2) at least one polyalkylene oxide having at least two hydroxyl groups,
(C)at least one aprotic polar solvent and
(D)at least one metal carbonate,
where the reaction mixture (R_{G}) does not comprise any substance which forms an azeotrope with water.

2. The method according to claim 1, wherein component (A1) comprises at least 50% by weight of at least one aromatic dihalosulfone compound selected from the group consisting of 4,4'-dichlorodiphenyl sulfone and 4,4'-difluorodiphenyl sulfone, based on the total weight of component (A1) in the reaction mixture (R_{G}).

3. The method according to claim 1 or claim 2, wherein component (B1) comprises at least 50% by weight of an aromatic dihydroxyl compound selected from the group consisting of 4,4'-dihydroxybiphenyl and 4,4'-dihydroxydiphenyl sulfone, based on the total weight of component (B1) in the reaction mixture (R_{G}).

4. The method according to any of claims 1 to 3, wherein component (B2) comprises at least 50% by weight of a polyalkylene oxide which is obtainable by polymerisation of ethylene oxide, 1,2-propylene oxide, 1,2-butylene oxide, 2,3-butylene oxide, 1,2-pentene oxide, 2,3-pentene oxide or mixtures of these monomers, based on the total weight of component (B2) in the reaction mixture (R_{G}).

5. The method according to any of claims 1 to 4, wherein the reaction mixture (R_{G}) comprises N-methyl-2-pyrrolidone as component (C).

6. The method according to any of claims 1 to 5, wherein the reaction mixture (R_{G}) comprises potassium carbonate as component (D).

7. The method according to any of claims 1 to 6, wherein component (A1) is 4,4'-dichlorodiphenyl sulfone, component (B1) is 4,4'-dihydroxydiphenyl sulfone and component (B2) is a polyethylene glycol.

8. The method according to any of claims 1 to 7, wherein the reaction mixture (R_{G}) comprises 0.7 to 0.995 mol of component (B1) and 0.005 to 0.3 mol of component (B2) per one mole of component (A1).

9. The method according to any of claims 1 to 8, wherein the polyarylethersulfone-polyalkylene oxide block copolymer (PPC) has a polydispersity (Q) of ≤ 4, preferably ≤ 3.5, where Q is defined as the quotient of the weight average molecular weight M_{w} and the number average molecular weight Mₙ.

10. The method according to any of claims 1 to 9, wherein at least 85% by weight of component (B2) present in the reaction mixture (R_{G}) are incorporated into the polyarylethersulfone-polyalkylene oxide block copolymer (PPC).

11. A polyarylethersulfone-polyalkylene oxide block copolymer (PPC) obtainable according to any of claims 1 to 10.

12. The polyarylethersulfone-polyalkylene oxide block copolymer (PPC) according to claim 11, which has a weight average molecular weight (M_{w}) in the range of 10 000 to 150 000 g/mol.

13. The polyarylethersulfone-polyalkylene oxide block copolymer (PPC) according to either of claims 11 or 12, which has a polydispersity (Q) in the range of 2.0 to ≤ 4.

## Revendications

1. Procédé de fabrication de copolymères blocs polyaryléthersulfone-polyoxyde d'alkylène (PPC) comprenant la polycondensation d'un mélange réactionnel (R_{G}) contenant les composants :
(A1) au moins un composé dihalogéné aromatique
(B1) au moins un composé dihydroxy aromatique
(B2) au moins un polyoxyde d'alkylène présentant au moins deux groupes hydroxyles,
(C) au moins un solvant aprotique dipolaire, et
(D) au moins un carbonate de métal,
le mélange réactionnel (R_{G}) ne contenant aucune substance qui forme un azéotrope avec l'eau.

2. Procédé selon la revendication 1, **caractérisé en ce que** les composants (A1) contiennent au moins 50 % en poids d'au moins un composé dihalogénosulfone choisi dans le groupe constitué de 4,4'-dichlorodiphénylsulfone et 4,4'-difluorodiphénylsulfone, rapporté au poids total des composants (A1) dans le mélange réactionnel (R_{G}).

3. Procédé selon la revendication 1 ou 2, **caractérisé en ce que** les composants (B1) contiennent au moins 50 % en poids d'au moins un composé dihydroxy aromatique choisi dans le groupe constitué de 4,4'-dihydroxybiphényle et 4,4'-dihydroxydiphénylsulfone, rapporté au poids total des composants (B1) dans le mélange réactionnel (R_{G}).

4. Procédé selon une des revendications 1 à 3, **caractérisé en ce que** les composants (B2) contiennent au moins 50 % en poids d'un polyoxyde d'alkylène qu'on obtient par polymérisation d'oxyde d'éthylène, d'oxyde de 1,2-propylène, d'oxyde de 1,2-butène, d'oxyde de 2,3-butène, d'oxyde de 1,2-pentène, d'oxyde de 2,3-pentène ou de mélanges de ces monomères, rapporté au poids total des composants (B2) dans le mélange réactionnel (R_{G}).

5. Procédé selon une des revendications 1 à 4, **caractérisé en ce que** le mélange réactionnel (R_{G}) contient comme composant (C) de la N-méthyl-2-pyrrolidone.

6. Procédé selon une des revendications 1 à 5, **caractérisé en ce que** le mélange réactionnel (R_{G}) contient comme composant (D) du carbonate de potassium.

7. Procédé selon une des revendications 1 à 6, **caractérisé en ce que** le composant (A1) est la 4,4'-dichlorodiphénylsulfone, le composant (B1) est la 4,4'-dihydroxydiphénylsulfone, et le composant (B2) est un polyéthylène glycol.

8. Procédé selon une des revendications 1 à 7, **caractérisé en ce que** le mélange réactionnel (R_{G}) contient par mole de composants (A1) 0,7 à 0,995 mol de composants (B1) et 0,005 à 0,3 mol de composants (B2).

9. Procédé selon une des revendications 1 à 8, **caractérisé en ce que** le copolymère bloc polyaryléthersulfone-polyoxyde d'alkylène (PPC) présente une polydispersité (Q) ≤ 4, de préférence ≤ 3, 5, Q étant défini comme le quotient du poids moléculaire moyen en poids M_{w} et du poids moléculaire moyen en nombre Mₙ.

10. Procédé selon une des revendications 1 à 9, **caractérisé en ce qu'**à la polycondensation, au moins 85 % en poids des composants (B2) contenus dans le mélange réactionnel (R_{G}) sont incorporés dans le copolymère bloc polyaryléthersulfone-polyoxyde d'alkylène (PPC).

11. Copolymère bloc polyaryléthersulfone-polyoxyde d'alkylène (PPC) qu'on peut obtenir selon une des revendications 1 à 10.

12. Copolymère bloc polyaryléthersulfone-polyoxyde d'alkylène (PPC) selon la revendication 11, **caractérisé en ce qu'**il présente un poids moléculaire moyen en poids (M_{w}) entre 10 000 et 150 000 g/mol.

13. Copolymère bloc polyaryléthersulfone-polyoxyde d'alkylène (PPC) selon la revendication 11 ou 12, **caractérisé en ce qu'**il présente une polydispersité (Q) entre 2,0 et ≤ 4.
